# EUROPÄISCHE PATENTSCHRIFT

(11) **EP 0 515 647 B1**
(45) Veröffentlichungstag und Bekanntmachung des Hinweises auf die Patenterteilung: **26.04.1995**
(21) Anmeldenummer: 92901799.4
(22) Anmeldetag: 02.12.1991
(51) Int. Cl.: G05D 16/10

(54) **HYDRAULISCHER DRUCKREGLER**
HYDRAULIC PRESSURE REGULATOR
REGULATEUR DE PRESSION HYDRAULIQUE

(30) Priorität: 13.12.1990 DE 9016844 U
(43) Veröffentlichungstag der Anmeldung: 02.12.1992
(73) Patentinhaber: SCHIEFER, Rolf, D-41238 Mönchengladbach (DE)
(72) Erfinder: SCHIEFER, Rolf, D-41238 Mönchengladbach (DE)
(74) Vertreter: Bonsmann, Manfred, Dipl.-Ing.
(86) Internationale Anmeldenummer: DE9100971
(87) Internationale Veröffentlichungsnummer: WO9210799

(56) Entgegenhaltungen:
- DE-A- 3 639 393
- DE-A- 3 703 715
- DE-A- 3 711 999
- DE-A- 3 840 865
- DE-B- 2 253 871
- US-A- 4 565 209

## Beschreibung

Die Erfindung betrifft einen hydraulischen Druckregler mit einem in einem Reglergehäuse zwischen einer Eingangsdruckkammer und einer Ausgangsdruckkammer für ein hydraulisches Medium befindlichen Steuerkolben.

Ein Regler dieser Art ist bekannt aus der US-A-4 565 209.

Hydraulische Druckregler werden in erster Linie dazu eingesetzt, schwankende Eingangsdrücke in einen konstanten Ausgangsdruck umzuwandeln. Einsatzgebiete hierfür sind beispielsweise das Auftragen von flüssigen Klebstoffen in der Verpackungsindustrie oder das Aufbringen von Farbe oder anderen Beschichtungsmedien. Wenn ein Abnahmestopp an der Ausgangsdruckkammer erfolgt, wenn also beispielsweise von der Bedienungsperson der Leimauftrag oder- Farbauftrag beendet oder unterbrochen wird, steht in der Ausgangsdruckkammer der zuletzt vorhandene Ausgangsdruck voll an. Dies hat verschiedene Nachteile:

Wenn beispielsweise der Verschluß der sich an die Ausgangsdruckkammer üblicherweise anschließenden Auftragsdüse zum Auftragen von Farbe, Leim od. dgl. nicht völlig dicht ist, tritt infolge des Druckes in der Ausgangsdruckkammer aus der Düse Medium unkontrolliert aus. Weiterhin gibt es Medien, die unter Druckeinfluß in unerwünschter Weise reagieren. So kann es beispielsweise sein, daß bei manchen Leimen infolge des in der Ausgangsdruckkammer und in dem sich daran anschließenden System anstehenden Druckes bis einschließlich der Spritzdüse ein unerwünschtes Aushärten erfolgt. Bei sog. Plastisolen kann beispielsweise ein Ausseparieren erfolgen, d.h., daß das vorher homogene Stoffgemisch in einzelne Bestandteile getrennt wird und in diesem Zustand nicht mehr verwendbar ist.

Ein weiterer Nachteil besteht darin, daß bei anstehendem Druck in der Ausgangsdruckkammer und dem sich daran anschließenden System keine Wartungsarbeiten oder Reparaturen durchgeführt werden können, da andernfalls der anstehende Ausgangsdruck möglicherweise zu einem unkontrollierten Ausbrechen des Mediums führen könnte.

Der Erfindung liegt die Aufgabe zugrunde, einen hydraulischen Druckregler der eingangs genannten Art so zu gestalten, daß dann, wenn ein Abnahmestopp für das Medium aus der Ausgangsdruckkammer erfolgt, auf Wunsch der Druck in der Ausgangsdruckkammer reduziert und - falls gewünscht - auf Null reduziert werden kann. Dabei soll den in der Praxis auftretenden Anforderungen Rechnung getragen werden, wonach beispielsweise bei einem kurzzeitigen Abnahmestopp keine Druckentlastung zu erfolgen braucht, da dann die geschilderten negativen Folgen normalerweise nicht auftreten, daß aber dann, wenn beispielsweise ein längerer Abnahmestopp vorgesehen ist, die gewünschte Druckreduzierung oder völlige Druckwegnahme erfolgen kann bzw. erfolgt.

Es gibt keine Druckregler, die bei relativ konstantem Eingangsdruck eine stufenlose Druckregelung mit automatischer Selbstentlastung zulassen. Der Aufbau bekannter hydraulischer Druckregler der eingangs genannten Art ist sehr aufwendig und kompliziert. Die bekannten Druckregler sind aus diesem Grund relativ stark reparaturanfällig und aufwendig in der Herstellung. Eine weitere Teilaufgabe der vorliegenden Erfindung besteht darin, einen hydraulischen Druckregler der eingangs genannten Art vorzuschlagen, der von einfachem Aufbau ist und daher robust, preiswert herstellbar und wartungsfreundlich ist, der aber gleichzeitig ein günstiges Regelverhalten aufweist.

Diese Aufgaben werden erfindungsgemäß dadurch gelöst, daß der Steuerkolben doppelt beaufschlagbar ausgebildet ist und auf den Steuerkolben einerseits der Eingangsdruck des zu regelnden hydraulischen Mediums und andererseits eine federnde Steuerdruckkraft einwirken, und daß der Steuerkolben auf seiner dem Eingangsdruck zugewandten Seite eine auf einem unteren vorstehenden Kolbenteil vorgesehene kleinere, dem Eingangsdruckmedium direkt zugewandte Kolbenfläche und eine auf einem oberen Kolbenteil vorgesehene größere Kolbenfläche aufweist, und der untere Kolbenteil einen unterhalb der größeren Kolbenfläche in eine obere Ringnut des Steuerkolbens mündenden Durchflußkanal für das hydraulische Medium aufweist, welcher an dem unteren Kolbenteil seitlich mit Abstand zu der kleineren Kolbenfläche in eine untere Ringnut mündet, und daß bei Reduzierung der federnden Steuerdruckkraft der Steuerkolben in eine Lage gebracht wird, bei der der Durchflußkanal gegenüber der Eingangsdruckkammer verschlossen ist, und gleichzeitig ein Druckentlastungsraum für das auf der Ausgangsseite des Steuerkolbens anstehende hydraulische Medium freigegeben wird.

Das Zusammenwirken der Druckkraft in der Eingangsdruckkammer und der dieser Druckkraft entgegenwirkenden federnden Steuerdruckkraft führt zu einem günstigen Regelverhalten, wobei die erfindungsgemäß vorgesehene Gestaltung des Steuerkolbens mit dem seitlich mündenden Durchflußkanal ebenfalls hierzu beiträgt. Der hydraulische Druckregler gemäß der Erfindung ist von relativ einfachem Aufbau und damit wartungsfreundlich und preiswert.

Wird die federnde Steuerdruckkraft reduziert, so wird der Steuerkolben durch Wirkung der Eingangsdruckkraft nach oben bewegt, so daß die sich unter der größeren Kolbenfläche befindliche Kammer vergrößert wird. Da diese Kammer mit der Ausgangsdruckkammer in direkter Verbindung steht, wird somit das ausgangsseitige Volumen vergrößert und dadurch der Ausgangsdruck verringert bzw. auf Null reduziert. Durch Veränderung der Größe der federnden Steuerdruckkraft kann daher der Druck in der Ausgangsdruckkammer bestimmt und bis auf den Wert Null reduziert werden. Die Einstellung der federnden Steuerdruckkraft kann beispielsweise manuell durch Betätigung einer Spindel mit einer Druckfeder erfolgen oder z.B. über einen Membranzylinder.

Ein genaues Regelverhalten des hydraulischen Druckreglers wird dadurch erreicht, daß der Steuerkolben je nach Überwiegen der Eingangsdruckkraft in der Eingangsdruckkammer oder der federnden Steuerdruckkraft in Längsrichtung bewegt wird. Ein Durchfluß des Mediums ist nur insoweit möglich, wie die untere Ringnut des Steuerkolbens freigegeben ist und das Medium durch den Durchflußkanal über die obere Ringnut in die Ausgangsdruckkammer gelangen kann. Überwiegt die Eingangsdruckkraft die federnde Steuerdruckkraft, wird der Steuerkolben entsprechend nach oben bewegt, bis die Ringnut die Eingangsdruckkammer verlassen hat und somit kein Medium mehr durchfließen kann.

In weiterer Ausgestaltung der Erfindung kann vorgesehen sein, daß zur Freigabe des Druckentlastungsraums das seitlich mündende, untere Ende des Durchflußkanals in dem unteren Kolbenteil mit einem Druckentlastungskanal in Verbindung gebracht wird. Dies erfolgt bei entsprechender Rücknahme der federnden Steuerdruckkraft. Über den Druckentlastungskanal kann das bis zum völligen Druckabbau aus der Ausgangsdruckkammer austretende Medium in geeigneter Weise rückgeführt werden. Es ist zweckmäßig, wenn ausgangsseitig in einem anschließenden System akkumulierende Gefäße angeordnet sind, wie z.B. elastische Schläuche etc..

Es kann auch vorgesehen sein, daß für den Steuerkolben ein diesen in der Stellung, in der der Durchflußkanal mit dem Druckentlastungskanal verbunden ist, haltender Anschlag vorgesehen ist. Durch einen derartigen Anschlag, der auch einstellbar bzw. verstellbar ausgebildet sein kann, kann bei unverändertem Eingangsdruck mit zwei einstellbaren Ausgangsdrücken gearbeitet werden.

In weiterer Ausgestaltung der Erfindung kann vorgesehen sein, daß der untere Kolbenteil in seinem Bereich zwischen der kleineren Kolbenfläche und der unteren Ringnut einen kleineren Durchmesser als in seinem übrigen Bereich aufweist, derart, daß eine Zirkulation des Eingangsmedium über den Druckentlastungskanal möglich ist. Dies ist beispielsweise dann sinnvoll, wenn es sich bei dem hydraulischen Medium um Leime handelt, die bei einem Stillstand aushärten bzw. ausseparieren (sog. Joghurteffekt).

Die Erfindung wird nachfolgend anhand des in den beigefügten Zeichnungen dargestellten Ausführungsbeispiels näher erläutert. Es zeigen:
- Fig. 1: einen schematischen Längsschnitt durch ein Ausführungsbeispiel eines hydraulischen Druckreglers gemäß der Erfindung;
- Fig. 2: eine Darstellung entsprechend Fig. 1, wobei jedoch der Steuerkolben in Arbeitsstellung bzw. Regelstellung ist.

Der in den Zeichnungen dargestellte hydraulische Druckregler weist ein Gehäuse 1 auf. In dem Gehäuse 1 ist eine Eingangsdruckkammer 2 mit einem schematisch dargestellten Anschlußgewinde 3 zum Anschluß beispielsweise einer Schlauchverschraubung für die Zufuhr eines hydraulischen Mediums von beispielsweise einer Kolbenpumpe (nicht dargestellt) vorgesehen. Ein Auslaufbereich für das Gewinde 3 ist mit 4 bezeichnet. An die Eingangsdruckkammer 2 schließt sich eine in dem Gehäuse 1 vorgesehene Führungsbohrung 5 für einen unteren Kolbenteil 6 eines insgesamt mit 7 bezeichneten Steuerkolbens an. Der Steuerkolben 7 weist außer dem unteren Kolbenteil 6 einen oberen Kolbenteil 8 auf, der in einer Zylinderausnehmung 9 des Gehäuses 1 verschieblich geführt ist. Der obere Kolbenteil 8 des Steuerkolbens 7 weist Kolbendichtungen 10 und 11 auf, die in entsprechenden Ausnehmungen des oberen Kolbenteils 8 angeordnet sind. Der untere Kolbenteil 6 ist mit dem oberen Kolbenteil 8 über ein Gewinde 12 verschraubt. Eine Gewindebohrung 13 dient lediglich dazu, den Steuerkolben beispielsweise bei einer Demontage aus dem Gehäuse 1 entfernen zu können. Das Gehäuse 1 weist eine obere mit einem Gewinde 14 versehene Ausnehmung 15 auf, in welche eine "federnde Steuerdruckkraft" eingeschraubt werden kann (nicht dargestellt). Es kann sich hierbei beispielsweise um einen Membranzylinder od. dgl. handeln. Dadurch kann auf das entsprechend der Zeichnung obere Stirnende des oberen Kolbenteils 8 des Steuerkolbens 7 eine federnde Steuerdruckkraft in Pfeilrichtung A ausgeübt werden. Eine unterhalb des Gewindes 14 vorgesehene Ausdrehung ist mit 16 bezeichnet. Das Gehäuse 1 weist außerdem eine mit einem Innengewinde 17 versehene Ausgangsdruckkammer 18 auf. Der Auslauf des Gewindes 17 ist mit 19 bezeichnet. Die Ausgangsdruckkammer 18 mündet mit einem kegeligen Bereich 20 in eine Verbindungsbohrung 21, mittels derer eine Verbindung zwischen der Ausgangsdruckkammer 18 und dem unterhalb des oberen Kolbenteils 8 befindlichen Raum 22 hergestellt ist. Die gesamte Ausgangsdruckkammer wird daher durch die eigentliche Ausgangsdruckkammer 18, die Verbindungsbohrung 21 und den Raum 22 gebildet.

Der untere Kolbenteil 6 des Steuerkolbens 7 weist in seinem Inneren einen Durchflußkanal 23 auf. Der Durchflußkanal 23 mündet über Querbohrungen 24 bzw. 25 in eine obere Ringnut 26 bzw. eine untere Ringnut 27 des Kolbenteils 6.

Der untere Kolbenteil 6 weist eine der Eingangsdruckkammer 2 zugewandte Kolbenfläche 28 auf, und der obere Kolbenteil 8 weist eine dem hydraulischen Druckmedium zugewandte Kolbenfläche 29 auf. Bei dem dargestellten Ausführungsbeispiel ist die Kolbenfläche 28 eine Kreiskolbenfläche und die Kolbenfläche 29 eine Ringkolbenfläche. Die Kolbenfläche 28 ist kleiner als die Kolbenfläche 29.

Wie ersichtlich, mündet der Durchflußkanal 23 unterhalb der größeren Kolbenfläche 29. Die untere Ringnut 27, in die der Durchflußkanal 23 außerdem mündet, ist mit Abstand zu der kleineren Kolbenfläche 28 angeordnet.

Weiterhin ist in dem Gehäuse 1 ein mit 30 bezeichneter Druckentlastungskanal vorgesehen, der in eine Ringnut 31 des Gehäuses mündet. Am gegenüberliegenden Ende mündet der Druckentlastungskanal 30 in eine Anschlußbohrung 32 mit einem Gewinde 33.

Ein Anschlag zur Begrenzung des entsprechend der zeichnerischen Darstellung nach oben möglichen Verschiebeweges des Steuerkolbens 7 wird beispielsweise dadurch gebildet, daß in das Gewinde 14 ein Anschlag eingeschraubt wird. Es kann sich dabei auch um das Element handeln, mit welchem die federnde Steuerungskraft aufgebracht wird.

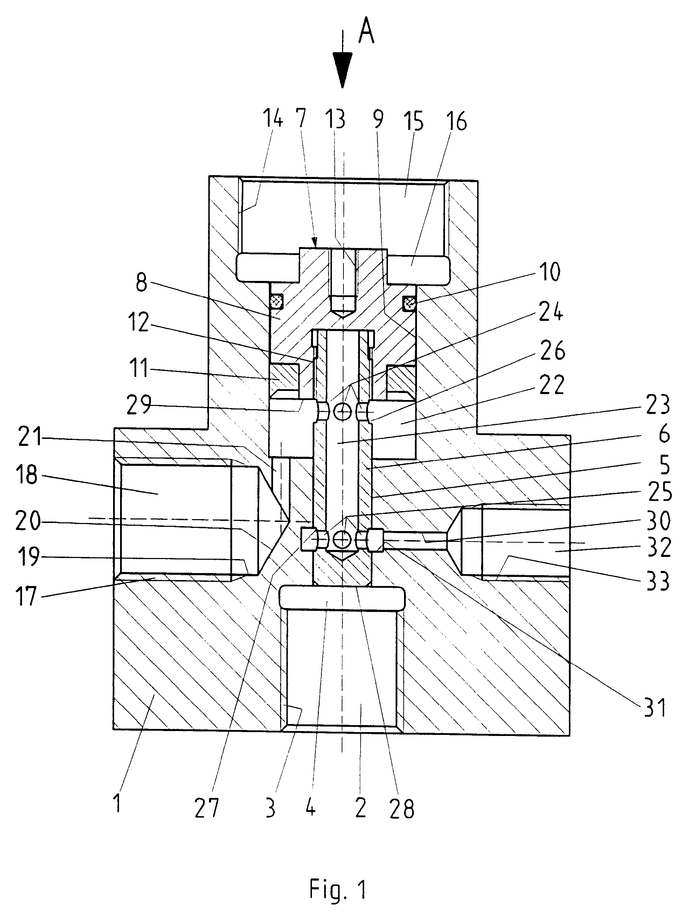

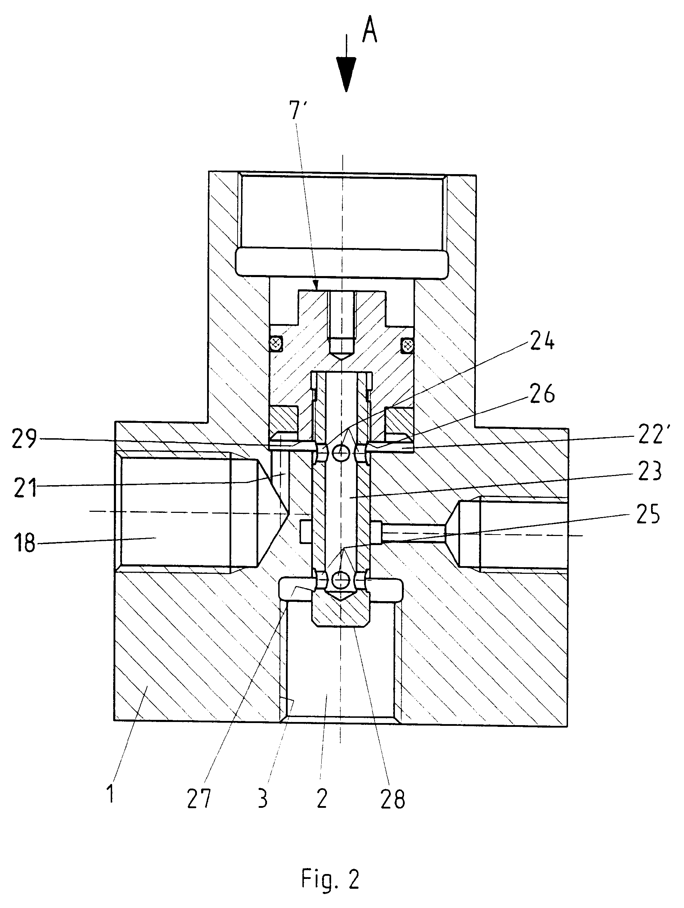

Die Darstellung in Fig. 2 unterscheidet sich von der Darstellung in Fig. 1 lediglich dadurch, daß der Steuerkolben 7 gegenüber der Darstellung in Fig. 1 nach unten bewegt ist. Der Steuerkolben in Fig. 2 ist aus diesem Grunde dort mit 7′ bezeichnet.

Die Wirkungsweise des hydraulischen Druckreglers ist wie folgt:

Der Eingangsdruckkammer 2 wird ein unter Druck stehendes hydraulisches Medium zugeleitet. Der Druck wird beispielsweise durch eine Kolbenpumpe erzeugt und unterliegt daher beim Umschaltpunkt Druckschwankungen. Die Aufgabe des hydraulischen Druckreglers ist unter anderem, dafür zu sorgen, daß in der Ausgangsdruckkammer 18 die Druckschwankungen ausgeglichen sind. An die Ausgangsdruckkammer 18 wird ein (nicht dargestelltes) System angeschlossen, welches beispielsweise in einer Auftragsdüse für ein aufzubringendes Medium endet.

Auf den Steuerkolben 7 wirkt entsprechend der zeichnerischen Darstellung von unten die Eingangsdruckkraft des hydraulischen Mediums und "von oben" die federnde Steuerdruckkraft in Pfeilrichtung A ein. In der in Fig. 1 dargestellten Position des Steuerkolbens 7 ist dieser durch Wirkung der Eingangsdruckkraft in seine obere Endlage nach oben geschoben worden. In dieser Position besteht eine Verbindung zwischen der Ausgangsdruckkammer 18, der Verbindungsbohrung 21 und des Raumes 22 über die Nut 26, die Querbohrungen 24, den Durchflußkanal 23, die Querbohrungen 25, die Ringnut 27 und die Ringnut 31 mit dem Druckentlastungskanal 30. In dieser Stellung ist die Ausgangsdruckkammer 18 druckentlastet. Ein Durchfluß des in der Eingangsdruckkammer 2 anstehenden hydraulischen Mediums ist nicht möglich.

Dies ist eine Position, bei der in dem sich an die Ausgangsdruckkammer anschließenden System Wartungsarbeiten durchgeführt werden, Düsen gewechselt werden können, od. dgl.. Falls die Düsenaustrittsöffnung undicht sein sollte, tritt kein Medium aus. Wenn der untere Kolbenteil 6 in seinem Bereich zwischen der kleineren Kolbenfläche 28 und der unteren Ringnut 27 einen kleineren Durchmesser als in seinem übrigen Bereich aufweist (nicht dargestellt), dann kann in dieser Position eine Zirkulation des hydraulischen Mediums erfolgen, indem hydraulisches Medium aus der Eingangsdruckkammer 2 durch den somit vorhandenen Ringspalt in die Ringnut 27 bzw. 31 eintreten und von dort durch den Druckentlastungskanal 30 und den Anschluß 32 austreten und zirkulieren kann. Die Größe der in Pfeilrichtung A in diesem Zustand einwirkenden Steuerdruckkraft ist Null.

Nimmt der Steuerkolben die in Fig. 2 dargestellte Position 7′ ein, so erfolgt dies durch Wirkung der in Pfeilrichtung A auf das oberen Stirnende des Steuerkolbens einwirkende federnde Steuerdruckkraft. Diese Kraft muß, um die Position 7′ des Steuerkolbens zu erreichen, größer sein, als die auf die kleinere Kolbenfläche 28 wirkende Eingangsdruckkraft in der Eingangsdruckkammer. Wenn die Position 7′ erreicht ist, fließt hydraulisches Medium aus der Eingangsdruckkammer 2 über die Ringnut 27, die Querbohrungen 25, den Durchflußkanal 23, die Querbohrungen 24, die Ringnut 26 in den in Fig. 2 mit 22′ bezeichneten Raum unterhalb der größeren Kolbenfläche 29. Von dort aus kann das Medium über die Verbindungsbohrung 21 in die Ausgangsdruckkammer 18 gelangen. Es wird vorausgesetzt, daß der Druck des Eingangsmediums in der Eingangsdruckkammer 2 stets größer ist, als die federnde Steuerdruckkraft. Bei der Position 7' des Steuerkolbens wirkt der Druck des Eingangsmediums nicht nur auf die kleinere Kolbenfläche 28, sondern auch auf die größere Kolbenfläche 29, so daß die in dieser Position vorhandene wirksame Kolbenfläche größer ist als bei der Position 7. Damit wird zum einen bewirkt, daß sich in der Ausgangsdruckkammer 18 ein Druck aufbauen kann, und zwar je nach eingestellter Größe der federnden Steuerdruckkraft. Zum anderen wird bewirkt, daß der Steuerkolben nach oben bewegt wird, und zwar soweit, daß der Durchfluß des Mediums durch die Ringnut 27 versperrt ist. In dieser Position herrscht Druck sowohl in der Eingangsdruckkammer 2 als auch in der Ausgangsdruckkammer 18. Wird aus der Ausgangsdruckkammer 18 hydraulisches Medium abgenommen, sinkt der Druck in der Ausgangsdruckkammer. Dadurch nimmt der auf die größere Kolbenfläche 29 "nach oben" einwirkende Druck ab. Da die Druckkraft in der Eingangsdruckkammer bei dieser Position nur noch auf den kleineren Kolbenteil 28 wirkt, überwiegt dann die federnde Steuerdruckkraft in Pfeilrichtung A, was dazu führt, daß der Steuerkolben nach unten bewegt wird und die Ringnut 27 teilweise oder ganz freigegeben wird. Dadurch wird der Druchfluß wieder freigegeben, und der beschriebene Vorgang wiederholt sich permanent. Die Druckregelung erfolgt also durch eine ständige Auf- und Abbewegung des Steuerkolbens.

Somit wird bei einer Verringerung der federnden Steuerdruckkraft der Druck in der Ausgangsdruckkammer verringert. Wird die federnde Steuerdruckkraft ganz weggenommen, fährt der Steuerkolben 7 in die in Fig. 1 gezeigte Position, in der ein Druckentlastungsraum für das auf der Ausgangsseite des Steuerkolbens anstehende hydraulische Medium freigegeben ist. Als Druckentlastungsraum kann entweder der Raum 22 angesehen werden oder der Raum 22 und zusätzlich dazu der Druckentlastungskanal 30.

## Patentansprüche

1. Hydraulischer Druckregler mit einem in einem Reglergehäuse zwischen einer Eingangsdruckkammer und einer Ausgangsdruckkammer für ein hydraulisches Medium befindlichen Steuerkolben, dadurch gekennzeichnet, daß der Steuerkolben (7) doppelt beaufschlagbar ausgebildet ist und auf den Steuerkolben (7) einerseits der Eingangsdruck des zu regelnden hydraulischen Mediums und andererseits eine federnde Steuerdruckkraft (A) einwirken, und daß der Steuerkolben (7) auf seiner dem Eingangsdruck zugewandten Seite eine auf einem unteren vorstehenden Kolbenteil (6) vorgesehene kleinere, dem Eingangsdruckmedium direkt zugewandte Kolbenfläche (28) und eine auf einem oberen Kolbenteil (8) vorgesehene größere Kolbenfläche (29) aufweist, und der untere Kolbenteil (6) einen unterhalb der größeren Kolbenfläche (29) in eine obere Ringnut (26) des Steuerkolbens mündenden Durchflußkanal (23) für das hydraulische Medium aufweist, welcher an dem unteren Kolbenteil (6) seitlich mit Abstand zu der kleineren Kolbenfläche (28) in eine untere Ringnut (27) mündet, und daß bei Reduzierung der federnden Steuerdruckkraft (A) der Steuerkolben (7) in eine Lage gebracht wird, bei der der Durchflußkanal (23) gegenüber der Eingangsdruckkammer (2) abgeschlossen ist, und gleichzeitig ein Druckentlastungsraum (z.B. 22) für das auf der Ausgangsseite des Steuerkolbens (7) anstehende hydraulische Medium freigegeben wird.

2. Hydraulischer Druckregler nach Anspruch 1, dadurch gekennzeichnet, daß zur Freigabe des Druckentlastungsraums das seitlich mündende, untere Ende des Durchflußkanals (23) in dem unteren Kolbenteil (6) mit einem Druckentlastungskanal (30) in Verbindung gebracht wird.

3. Hydraulischer Druckregler nach Anspruch 1, dadurch gekennzeichnet, daß für den Steuerkolben (7) ein diesen in der Stellung, in der der Durchflußkanal (23) mit dem Druckentlastungskanal (30) verbunden ist, haltender Anschlag vorgesehen ist.

4. Hydraulischer Druckregler nach Anspruch 1, dadurch gekennzeichnet, daß bei Wegnahme der federnden Steuerdruckkraft (A) der Steuerkolben (7) durch den auf die kleinere Kolbenfläche (28) einwirkenden Druck des hydraulischen Mediums derart bewegt wird, daß der sich unterhalb der größeren Kolbenfläche (29) befindliche Raum (22) soweit vergrößert wird, daß dieser Raum als Druckentlastungsraum wirken kann.

5. Hydraulischer Druckregler nach Anspruch 2 oder 3, dadurch gekennzeichnet, daß der untere Kolbenteil (6) in seinem Bereich zwischen der kleineren Kolbenfläche (28) und der unteren Ringnut (27) einen kleineren Durchmesser als in seinem übrigen Bereich aufweist, derart, daß eine Zirkulation des in der Eingangsdruckkammer (2) befindlichen hydraulischen Mediums über den Druckentlastungskanal (30) möglich ist.

## Claims

1. A hydraulic pressure regulator comprising a control piston disposed in a regulator housing between an inlet pressure chamber and an outlet pressure chamber for a hydraulic medium, characterised in that the control piston (7) is adapted to be doubly acted upon and the inlet pressure of the hydraulic medium to be regulated acts on the control piston (7) on the one hand and a resilient control pressure force (A) acts on the control piston (7) on the other hand, and that the control piston (7), on its side towards the inlet pressure, has a smaller piston surface (28) which is provided on a lower projecting piston part (6) and which is directly towards the inlet pressure medium and a larger piston surface (29) which is provided on an upper piston part (8), and the lower piston part (6) has a flow duct (23) for the hydraulic medium, which opens beneath the larger piston surface (29) into an upper annular groove (26) in the control piston and which opens into a lower annular groove (27) at the lower piston part (6) laterally at a spacing relative to the smaller piston surface (28), and that upon a reduction in the resilient control pressure force (A) the control piston (7) is moved into a position in which the flow duct (23) is closed off relative to the inlet pressure chamber (2) and at the same time a pressure relief chamber (for example 22) for the hydraulic medium obtaining on the outlet side of the control piston (7) is opened.

2. A hydraulic pressure regulator according to claim 1 characterised in that for opening of the pressure relief chamber the laterally opening lower end of the flow duct (23) in the lower piston part (6) is brought into communication with a pressure relief duct (30).

3. A hydraulic pressure regulator according to claim 1 characterised in that provided for the control piston (7) is an abutment for holding it in the position in which the flow duct (23) is oommunicated with the pressure relief duct (30).

4. A hydraulic pressure regulator according to claim 1 characterised in that when the resilient control pressure force (A) is removed the control piston (7) is moved by the pressure of the hydraulic medium, which acts on the smaller piston surface (28), in such a way that the chamber (22) beneath the larger piston surface (29) is enlarged so that said chamber can act as a pressure relief chamber.

5. A hydraulic pressure regulator according to claim 2 or claim 3 characterised in that the lower piston part (6), in its region between the smaller piston surface (28) and the lower annular groove (27), is of a smaller diameter than in its remaining region, so that circulation of the hydraulic medium in the inlet pressure chamber (2) is possible by way of the pressure relief duct (30).

## Revendications

1. Régulateur de pression hydraulique, avec un piston de commande qui se trouve dans un boîtier de régulateur entre une chambre de pression d'entrée et une chambre de pression de sortie pour un fluide hydraulique, **caractérisé** en ce que le piston de commande (7) est conçu à double possibilité de sollicitation, la pression d'entrée du fluide hydraulique à réguler agissant d'un côté et une force élastique de pression de commande (A) de l'autre côté sur le piston de commande (7), en ce que le piston de commande (7) présente, sur son côté exposé à la pression d'entrée, une surface de piston plus petite (28), prévue sur une partie inférieure de piston dépassante (6) et directement exposée au fluide à la pression d'entrée, et une surface de piston plus grande (29) prévue sur une partie supérieure de piston (8), et la partie inférieure de piston (6) présente un canal de passage (23) pour le fluide hydraulique qui débouche dans une rainure annulaire supérieure (26) du piston de commande en dessous de la surface de piston plus grande (29) et qui, dans la partie inférieure de piston (6), débouche latéralement à distance de la surface de piston plus petite (28) dans une rainure annulaire inférieure (27), et en ce qu'en réduisant la force élastique de pression de commande (A), le piston de commande (7) est amené dans une position dans laquelle le canal de passage (23) est isolé de la chambre de pression d'entrée (2), tandis qu'est simultanément ouverte une chambre de relâchement de pression (22 par exemple) pour le fluide hydraulique présent sur le côté de sortie du piston de commande (7).

2. Régulateur de pression hydraulique selon la revendication 1, **caractérisé** en ce que la chambre de relâchement de pression est ouverte par le fait que l'extrémité inférieure, latéralement débouchante, du canal de passage (23) dans la partie inférieure de piston (6) est amenée en communication avec un canal de relâchement de pression (30).

3. Régulateur de pression hydraulique selon la revendication 1, **caractérisé** en ce qu'est prévue, pour le piston de commande (7), une butée qui le maintient dans la position dans laquelle le canal de passage (23) communique avec le canal de relâchement de pression (30).

4. Régulateur de pression hydraulique selon la revendication 1, **caractérisé** en ce qu'en supprimant la force élastique de pression de commande (A), le piston de commande (7) est déplacé, par la pression du fluide hydraulique agissant sur la surface de piston plus petite (28), de telle sorte que la chambre (22), qui se trouve en dessous de la surface de piston plus grande (29), est suffisamment agrandie pour pouvoir jouer le rôle de chambre de relâchement de pression.

5. Régulateur de pression hydraulique selon la revendication 2 ou 3, **caractérisé** en ce que la partie inférieure de piston (6) présente un plus petit diamètre dans sa région comprise entre la surface de piston plus petite (28) et la rainure annulaire inférieure (27) que dans son autre région, ce qui permet au fluide hydraulique qui se trouve dans la chambre de pression d'entrée (2) de circuler par le canal de relâchement de pression (30).
